# DEMANDE DE BREVET EUROPEEN

(11) **EP 4 701 028 A1**
(43) Date de publication de la demande: **25.02.2026**
(21) Numéro de dépôt: 25190916.4
(22) Date de dépôt: 22.07.2025
(51) Int. Cl.: H02J 4/00

(54) **RÉSEAU D´ALIMENTATION POUR UN AÉRONEF, AÉRONEF ET PROCÉDÉ DE COMMANDE ASSOCIÉS**

(30) Priorité: 22.07.2024 FR 2408043
(71) Demandeur: Dassault Aviation, 75008 Paris (FR)
(72) Inventeur: AUROY, Alexandre, 33701 MERIGNAC CEDEX (FR); BARRACO, Thomas, 33701 MERIGNAC CEDEX (FR); SIGRIST, Zoé, 33701 MERIGNAC CEDEX (FR)
(74) Mandataire: Lavoix

(57) **Abrégé**

La présente invention concerne un réseau d'alimentation (20) pour un aéronef (10), le réseau comprenant :
- un moteur d'entraînement (21) ;
- une machine électrique (23), comprenant un bobinage (25), le bobinage comprenant au moins trois enroulements (26, 27, 28), le bobinage comprenant un point milieu (29) commun à chaque enroulement;
- au moins un convertisseur (30), le ou chaque convertisseur étant connecté aux enroulements du bobinage ;
- des charges (69, 70) connectées au, ou à chaque convertisseur ; et
- une unité électronique de contrôle (68) du ou de chaque convertisseur.
Le réseau comprend en outre des moyens de connexion (80) du point milieu (29) du ou de chaque bobinage à une unité de puissance au sol (82), et l'unité électronique de contrôle est configurée pour commander au moins un convertisseur dans un fonctionnement en élévation de tension.

## Description

La présente invention concerne un réseau d'alimentation pour un aéronef, le réseau comprenant :
- un moteur d'entraînement ;
- une machine électrique, connectée mécaniquement au moteur pour l'entraînement de la machine électrique, la machine électrique comprenant au moins un bobinage, le ou chaque bobinage comprenant au moins trois enroulements, connectés entre eux en étoile, le ou chaque bobinage comprenant un point milieu commun à chaque enroulement ;
- au moins un convertisseur, le ou chaque convertisseur étant connecté aux enroulements du ou de l'un des bobinages de la machine électrique ;
- des charges connectées au, ou à chaque convertisseur ; et
- une unité électronique de contrôle du ou de chaque convertisseur, l'unité électronique de contrôle étant configurée pour commander au moins un convertisseur parmi le ou les convertisseurs dans un fonctionnement en redresseur de tension lorsque la machine électrique convertit un couple mécanique fourni par le moteur en un courant électrique alternatif.

Afin de recharger une batterie embarquée dans un aéronef, il est connu de la recharger à l'aide d'une source externe d'alimentation au sol, aussi appelée en anglais « Ground Power Unit », lorsque l'avion est au sol. Cependant, afin de pouvoir utiliser l'unité de puissance au sol pour charger la batterie, il est nécessaire d'utiliser un convertisseur, par exemple un convertisseur élévateur de tension, connecté entre la batterie et la source externe d'alimentation au sol. De manière connue, un convertisseur dédié au chargement de la batterie par la source externe d'alimentation au sol est intégré à l'aéronef, ce qui augmente la charge et le volume embarqués dans l'aéronef. En variante, il est également connu de modifier la source externe d'alimentation au sol en y connectant un convertisseur au sol, cependant, cela limite les endroits où la batterie de l'aéronef peut être rechargé aux endroits disposant d'un tel convertisseur. De plus, ce convertisseur est souvent connecté à la source externe d'alimentation au sol avec un connecteur spécifique ce qui limite d'autant plus la possibilité de charger l'aéronef.

Le but de l'invention est alors de proposer un réseau d'alimentation pour un aéronef permettant d'alimenter électriquement l'aéronef avec une source externe d'alimentation au sol non modifiée tout en limitant la charge et le volume embarqués dans l'aéronef.

A cet effet, l'invention a pour objet un réseau comprenant en outre des moyens de connexion du point milieu du ou de chaque bobinage à une unité de puissance au sol,
l'unité électronique de contrôle est configurée pour commander au moins un convertisseur parmi le ou les convertisseurs dans un fonctionnement en élévation de tension lorsque les moyens de connexion sont connectés à une unité de puissance au sol pour l'alimentation du point milieu du ou de chaque bobinage, afin d'alimenter électriquement les charges.

Grâce à l'invention, il est possible d'alimenter électriquement l'aéronef et, le cas échéant, de recharger sa batterie sans ajouter de convertisseur supplémentaire au réseau. En effet, ce sont les systèmes déjà existants dans l'aéronef pour l'alimentation électrique qui sont utilisés pour élever la tension afin d'alimenter électriquement l'aéronef à partir de l'unité de puissance au sol. Ainsi, il n'est pas nécessaire d'embarquer un convertisseur supplémentaire dédié à l'alimentation électrique de l'aéronef lorsqu'il est au sol, ce qui limite donc la masse embarquée.

De plus, il n'est pas non plus nécessaire de modifier la source externe d'alimentation servant au chargement en y ajoutant un convertisseur additionnel. L'aéronef peut ainsi être alimenté en électricité depuis le sol par une unité de puissance auxiliaire standard, disponible sur tous les aéroports, ou bases aéronautiques.

Suivant d'autres aspects avantageux de l'invention, le réseau comprend une ou plusieurs des caractéristiques suivantes, prises isolément ou suivant toutes les combinaisons techniquement possibles :
- la machine électrique comprend un premier et un deuxième bobinage, et le réseau comprend un premier et un deuxième convertisseur, le premier convertisseur étant connecté aux enroulements du premier bobinage et le deuxième convertisseur étant connecté aux enroulements du deuxième bobinage ;
- le réseau comprend un interrupteur, et lorsque le deuxième convertisseur est commandé dans un fonctionnement en élévation de tension, les points milieux des premier et deuxième bobinages sont connectés entre eux par l'interrupteur entre les points milieux, et les moyens de connexion connectent une borne positive de sortie du premier convertisseur à l'unité de puissance au sol pour alimenter le point milieu du deuxième bobinage par l'intermédiaire du premier convertisseur et du premier bobinage afin d'alimenter électriquement les charges ;
- la machine électrique comprend un premier bobinage, et le réseau comprend :
   - un deuxième bobinage comprenant au moins trois enroulements connectés entre eux en étoile et un point milieu commun à chaque enroulement,
   - un premier et un deuxième convertisseur, le premier convertisseur étant connecté aux enroulements du premier bobinage et le deuxième convertisseur étant connecté aux enroulements du deuxième bobinage, et
   - un interrupteur, connecté entre les points milieux du premier et du deuxième bobinage et dans lequel, lorsque le deuxième convertisseur est commandé dans un fonctionnement en élévation de tension, les points milieux des premier et deuxième bobinages sont connectés entre eux par l'interrupteur, et les moyens de connexion connectent une borne positive de sortie du premier convertisseur à l'unité de puissance au sol pour alimenter le point milieu du deuxième bobinage par l'intermédiaire du premier convertisseur et du premier bobinage afin d'alimenter électriquement les charges ;
- le réseau comprend en outre :
- un deuxième moteur d'entraînement ;
- une deuxième machine électrique, connectée mécaniquement au deuxième moteur pour l'entraînement de la deuxième machine électrique, la deuxième machine électrique comprenant un bobinage comprenant au moins trois enroulements, connectés entre eux en étoile, de sorte que le bobinage comprenne un point milieu commun à chaque enroulement ;
- un troisième convertisseur, connecté aux enroulements de la deuxième machine électrique et aux charges ;
- les moyens de connexion sont des premiers et deuxièmes moyens de connexion du point milieu de chaque bobinage a première machine électrique à l'unité de puissance au sol et le réseau comprend des troisièmes moyens de connexion du point milieu du bobinage de la deuxième machine électrique à l'unité de puissance au sol;
   l'unité électronique de contrôle étant configurée pour commander le troisième convertisseur dans un fonctionnement en redresseur de tension lorsque la machine électrique convertit un couple mécanique fourni par le deuxième moteur en un courant électrique alternatif, et pour commander le troisième convertisseur dans un fonctionnement en élévation de tension lorsque les deuxièmes moyens de connexion sont connectés à l'unité de puissance au sol pour l'alimentation du point milieu du bobinage de la deuxième machine électrique afin d'alimenter électriquement les charges ;
- le ou chaque bobinage comprend trois enroulements et le ou chaque convertisseur comprend trois branches, chaque branche comprenant deux interrupteurs, et un point milieu de chaque branche, situé entre les deux interrupteurs, étant relié à un enroulement du bobinage ;
- le réseau comprend des moyens de connexion auxiliaires du ou de chaque convertisseur à une source externe d'alimentation, et l'unité électronique de contrôle est configurée en outre pour commander le ou chaque convertisseur selon le fonctionnement en redresseur de tension en outre lorsque les moyens de connexion auxiliaires sont connectés à une unité de puissance au sol auxiliaire, les moyens de connexion auxiliaires comprenant chacun un interrupteur, pour l'alimentation du ou de chaque convertisseur afin d'alimenter électriquement les charges ;
- les charges incluent une batterie, de tension supérieure ou égale à 250V, connectée au ou à chaque convertisseur, et lorsque l'unité électronique de contrôle commande au moins un convertisseur parmi le ou les convertisseurs dans un fonctionnement en élévation de tension, la batterie est alimentée électriquement afin d'être chargée.

L'invention concerne également un aéronef comprenant le réseau d'alimentation décrit précédemment.

L'invention concerne également un procédé de commande d'un réseau d'alimentation, le réseau d'alimentation étant tel que décrit précédemment, le procédé comprenant les étapes suivantes :
- commande d'au moins un parmi le ou les convertisseurs dans un fonctionnement en redresseur de tension, lorsque la machine électrique convertit un couple mécanique fourni par le moteur en courant électrique alternatif ; et
- commande d'au moins un convertisseur parmi le ou les convertisseurs dans un fonctionnement en élévation de tension lorsqu'au moins l'un des moyens de connexion est connecté à l'unité de puissance au sol pour l'alimentation du point milieu du bobinage.

Suivant d'autres aspects avantageux de l'invention, le procédé comprend les caractéristiques suivantes :
- le procédé comprend en outre une commande d'au moins un convertisseur parmi le ou les convertisseurs dans un fonctionnement en onduleur afin d'alimenter électriquement la machine électrique à partir d'une batterie connectée au, ou à chaque convertisseur ;
- le réseau comprend des moyens de connexion auxiliaires du ou de chaque convertisseur à une source externe d'alimentation, et l'étape de commande du convertisseur dans le fonctionnement en redresseur de tension est réalisée en outre lorsque les moyens de connexion auxiliaires sont connectés à l'unité de puissance au sol auxiliaire.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma d'un aéronef comprenant un réseau d'alimentation selon un premier mode de réalisation de l'invention ;
- [Fig. 2] la figure 2 est un logigramme d'un procédé selon un mode de réalisation de l'invention.
- [Fig. 3] la figure 3 est un schéma d'un réseau d'alimentation selon un deuxième mode de réalisation de l'invention ;
- [Fig. 4] la figure 4 est un schéma d'un réseau d'alimentation selon un troisième mode de réalisation de l'invention ; et
- [Fig. 5] la figure 5 est un schéma d'un réseau d'alimentation selon un quatrième mode de réalisation de l'invention ; et
- [Fig. 6] la figure 6 est un schéma d'un réseau d'alimentation selon un cinquième mode de réalisation de l'invention.

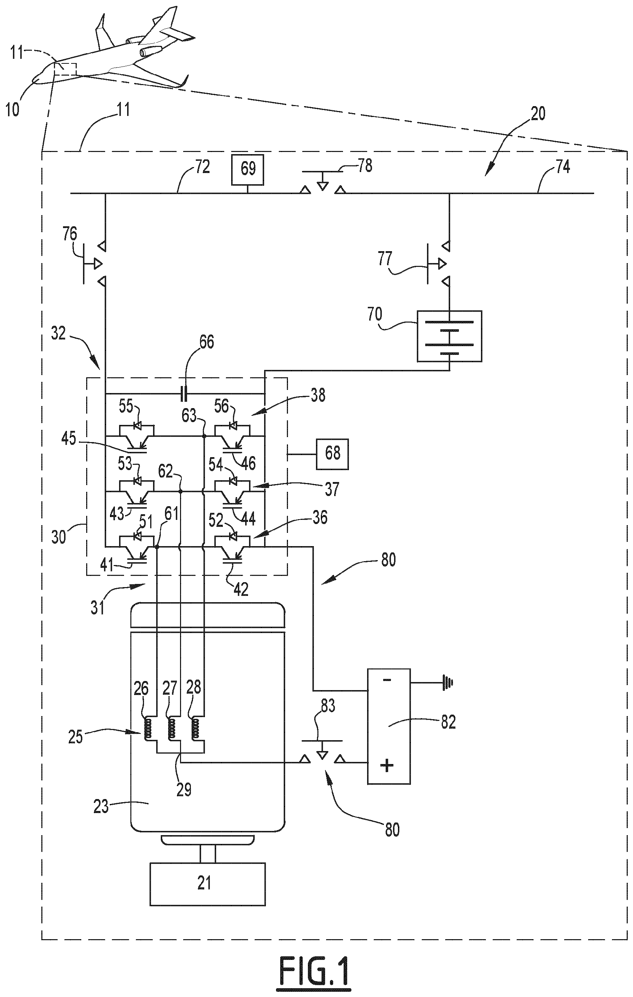

La figure 1 représente un aéronef 10. L'aéronef 10 est par exemple un avion, ou un drone. Un détail 11 de l'aéronef 10 est également représenté sur la figure 1. Le détail 11 montre un réseau d'alimentation 20 compris dans l'aéronef 10. Le réseau d'alimentation 20 comprend un moteur d'entraînement thermique 21, connecté mécaniquement à une machine électrique 23 pour l'entraînement de la machine électrique 23. Le moteur d'entraînement 21, aussi appelé simplement moteur, est un moteur propulsant l'aéronef 10, notamment lorsque l'aéronef 10 est en vol. Le moteur 21 est par exemple un turboréacteur.

La machine électrique 23 est configurée pour convertir une force mécanique, avantageusement un couple mécanique reçu du moteur 21 en un courant électrique. Avantageusement, la machine électrique 23 est également configurée inversement pour convertir un courant électrique en couple mécanique pour entraîner le moteur 21. La machine électrique 23 est par exemple un moteur électrique, alimentée soit par un couple mécanique pour fournir de l'électricité, soit par de l'électricité pour fournir un couple.

Avantageusement, le courant électrique produit par la machine électrique 23 est un courant triphasé et alternatif. La machine électrique 23 est par exemle de type synchrone, asynchrone, ou encore, à reluctance variable.

La machine électrique 23 comprend un bobinage 25. Le bobinage 25 comprend trois enroulements 26, 27 et 28 pour produire du courant triphasé alternatif. En variante non représentée, le bobinage 25 comprend plus de trois enroulements. Les enroulements 26, 27 et 28 sont par exemple formés par des bobines, et connectés entre eux en étoile. Ainsi, le bobinage 25 comprend un point milieu 29, dit aussi point neutre, commun à chaque enroulement 26, 27, 28.

Le réseau 20 comprend en outre un convertisseur 30, connecté aux enroulements 26, 27 et 28. Avantageusement, le convertisseur 30 comprend une entrée 31, une sortie 32, et trois branches 36, 37 et 38 reliées en parallèle entre elles sur la sortie 32. Chaque branche comprend deux interrupteurs, respectivement les interrupteurs 41, 42 ; 43, 44 et 45, 46. Par interrupteur, on entend un composant commandable en commutation. Chaque branche 36, 37, 38 comprend deux diodes, respectivement 51, 52 ; 53, 54 et 55, 56. Dans l'exemple de la figure 1, chaque diode 51 à 56 est associée avec un interrupteur 41 à 46 respectif et est disposée en parallèle de l'interrupteur auquel elle est associée. Les interrupteurs 41 à 46 sont avantageusement des interrupteurs à semi-conducteurs, tels que des transistors à effet de champ, ou FET, de l'anglais « Field Effect Transistor », des transistors bipolaires à grille isolée, ou IGBT, de l'anglais « Insulated Gate Bipolar Transistor ».

En variante non représentée, chaque branche comprend plus de deux interrupteurs et plus de deux diodes.

Chaque branche 36, 37, 38 comprend un point milieu, respectivement 61, 62, 63, localisé entre les deux interrupteurs de la branche 41, 42 ; 43, 44 et 45, 46. Les points milieux 61, 62, 63 sont connectés à l'un des enroulements de la machine 23, respectivement 26, 27 et 28 et forment l'entrée 31.

Le convertisseur 30 comprend également un condensateur 66, connecté en parallèle des branches 36, 37, 38.

Le réseau 20 comprend en outre une unité électronique 68 de contrôle du convertisseur 30, connectée au convertisseur 30. L'unité électronique de contrôle 68 est par exemple réalisée sous forme d'un composant logique programmable, tel qu'un FPGA, de l'anglais « Field Programmable Gate Array », ou encore d'un circuit intégré, tel qu'un ASIC, de l'anglais « Application Specific Integrated Circuit ».

L'unité électronique de contrôle 68 est configurée pour commander le convertisseur 30 dans un fonctionnement en redresseur de tension (AC/DC) et dans un fonctionnement en élévation de tension (DC/DC), ainsi qu'expliqué plus en détail dans la suite. Avantageusement, l'unité électronique de contrôle est, en outre, configurée pour commander le convertisseur 30 dans un fonctionnement en onduleur (DC/AC). Pour cela, l'unité électronique de contrôle 68 commande chaque interrupteur 41 à 46 entre une configuration fermée et une configuration ouverte, comme connu en soi.

La sortie 32 du convertisseur 30 est connectée à des charges de l'aéronef 10. Les charges sont par exemple les charges 69 du réseau de bord de l'aéronef 10, une batterie 70 ou encore une unité de puissance secondaire. Les charges 69 du réseau de bord comprennent des composants électroniques nécessaires au fonctionnement de l'aéronef 10. La batterie 70 est optionnelle. La batterie 70 est avantageusement une batterie haute tension, délivrant par exemple une tension supérieure à 250V, par exemple égale à 270V. Selon un exemple, et ainsi que représenté dans la figure 1, la batterie 70 est constituée d'une pluralité de batteries, connectées par exemple en parallèle sur un bus de batterie. La batterie 70 sert avantageusement à alimenter les charges 69 du réseau de bord de l'aéronef 10. Avantageusement, la batterie 70 sert également à démarrer ou assister électriquement le moteur 21.

Dans l'exemple de la figure 1, une borne positive de la sortie 32 du convertisseur 30 est connectée à un bus d'interconnexion 72 et une borne positive de la batterie 70 est connectée à un bus de partage 74, respectivement par l'intermédiaire d'interrupteurs 76 et 77. Le bus d'interconnexion 72 et le bus de partage 74 sont connectés entre eux par l'intermédiaire d'un interrupteur de partage 78. Une borne négative de la sortie 32 du convertisseur 30 est connectée directement à la batterie 70, en particulier à une borne négative de la batterie 70. En variante, la deuxième borne de la sortie 32 et la borne négative de la batterie 70 sont toutes les deux connectées à une référence de potentiel commune.

Avantageusement, les charges 69 du réseau de bord sont connectées au bus d'interconnexion 72.

Le réseau 20 comprend en outre des moyens 80 de connexion du point neutre 29 à une source externe d'alimentation, qui est ici une unité de puissance au sol 82. Les moyens de connexion 80 sont par exemple formés de bus de connexion pour relier une borne positive de l'unité de puissance au sol 82 au point neutre 29 d'une part, et pour connecter une borne négative de l'unité de puissance au sol 82 aux branches 36, 37 et 38 du convertisseur 30. En variante, la borne négative de l'unité de puissance au sol 82 est connectée à la référence de potentiel, ou directement à une borne négative de la batterie 70. Avantageusement, les moyens de connexion 80 comprennent en outre un interrupteur 83, qui, lorsqu'il est en configuration fermée, laisse circuler un courant électrique depuis l'unité de puissance au sol 82 vers le point neutre 29.

L'unité de puissance au sol 82 est également connue sous son nom anglais « Ground Power Unit », ou GPU. L'unité de puissance au sol 82 est configurée pour fournir un courant continu. Selon un exemple, le courant continu fourni par l'unité de puissance au sol 82 est un courant continu basse tension, par exemple de tension inférieure à 30V, de préférence égale à 28V.

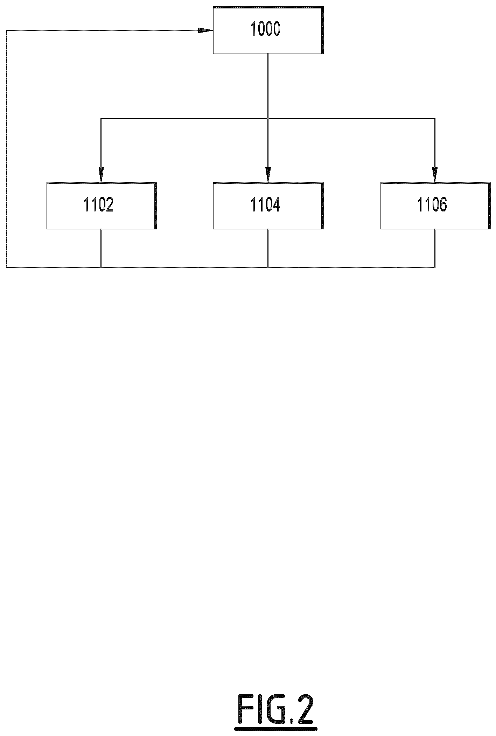

Un procédé de commande du réseau d'alimentation 20 est maintenant décrit en regard de la figure 2. Le procédé est mis en œuvre par l'unité électronique de contrôle 68.

L'unité électronique de contrôle 68 est de manière avantageuse, dans un état initial 1000.

En l'absence d'unité de puissance au sol 82, lorsque la machine électrique 23 convertit un couple mécanique, fourni par le moteur 21 en courant électrique alternatif, l'unité électronique de contrôle 68 commande le convertisseur 30 dans le mode de fonctionnement en redresseur de tension lors d'une étape 1102. L'étape 1102 est par exemple réalisée lorsque l'aéronef 10 est en vol. Le courant continu produit par le convertisseur 30 est utilisé par exemple pour alimenter les charges, par exemple pour alimenter les charges 69 et/ou charger la batterie 70.

Lorsque les moyens de connexion 80 sont connectés à l'unité de puissance au sol 82 pour l'alimentation du point neutre 29, et avantageusement, l'interrupteur 83 est en configuration fermée, l'unité électronique de contrôle 68 commande le convertisseur 30 dans le fonctionnement en élévation de tension lors d'une étape 1104. Dans ce cas, les enroulements 26, 27 et 28 et le convertisseur 30 fonctionnement ensemble comme un convertisseur élévateur de tension. L'étape 1104 a lieu lorsque l'aéronef 10 est au sol, afin de pouvoir connecter les moyens de connexion 80 à l'unité de puissance au sol 82.

L'unité de puissance au sol 82 fournit par exemple un courant continu de tension égale à 28V, et l'ensemble formé des enroulements 26, 27 et 28, ainsi que le convertisseur 30 commandé par l'unité électronique de contrôle 68, convertissent le courant en courant continu haute tension, par exemple supérieure à 250V, afin d'alimenter électriquement l'aéronef 10. Cela consiste en l'alimentation des charges, par exemple les charges 69, et/ou en le chargement de la batterie 70. La batterie 70, une fois chargée sert par exemple à alimenter les charges 69, ou assister électriquement le moteur 21, par exemple lorsque l'aéronef 10 est en vol.

Le bobinage 25 est ainsi utilisé avec le convertisseur 30 pour convertir le courant continu en haute tension, ce qui permet l'utilisation d'éléments déjà existants et intégrés au réseau 20 pour alimenter électriquement l'aéronef 10, par exemple pour charger la batterie 70 à l'aide de l'unité de puissance au sol 82. Il n'est donc pas nécessaire de prévoir un bobinage, et/ou un convertisseur supplémentaire afin d'alimenter électriquement l'aéronef 10 à partir de l'unité de puissance au sol 82.

Avantageusement, l'unité électronique 68 commande le convertisseur 30 dans le fonctionnement en onduleur afin d'alimenter électriquement la machine électrique 23 à partir de la batterie 70 lors d'une étape 1106. Dans ce cas, la machine électrique 23 génère un couple mécanique à partir du courant électrique fourni par l'onduleur 30 afin de faire fonctionner le moteur 21. L'étape 1106 est par exemple réalisée sur commande de l'utilisateur, qui souhaite par exemple que le moteur 21 soit alimenté en électricité pour son fonctionnement. Cela permet par exemple de démarrer le moteur 21, ou de l'assister en cas de défaillance.

Avantageusement, l'unité électronique 68 passe de l'une des étapes 1102, 1104 ou 1106 et revient à l'état initial 1000, par exemple une fois une durée prédéterminée écoulée, ou suite à une commande de l'utilisateur.

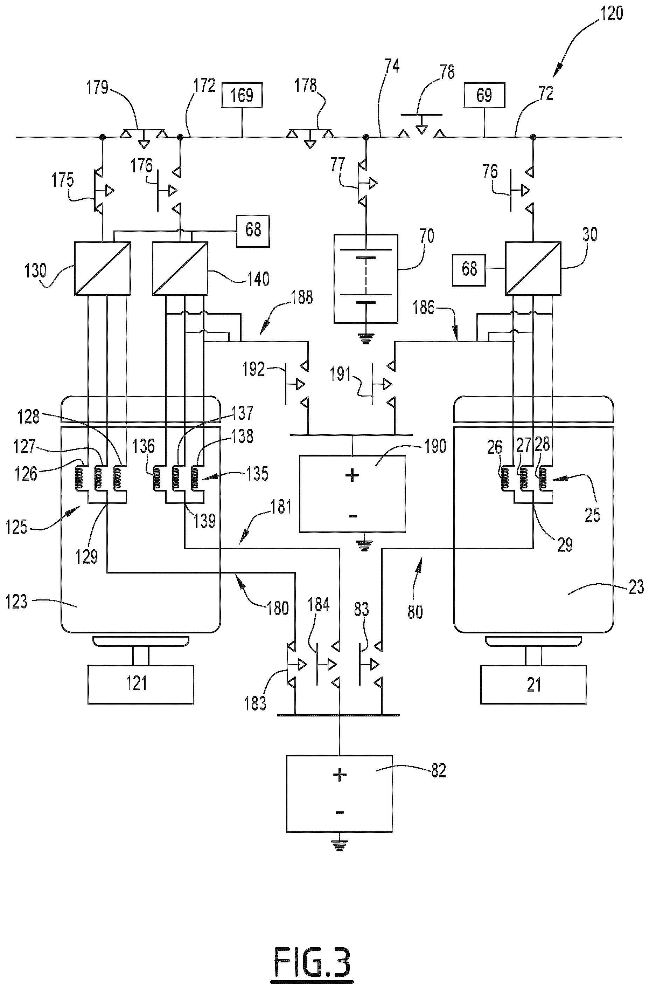

La figure 3 est un schéma d'un réseau 120, en tant que forme de réalisation alternative au réseau 20. Le réseau 120 comprend les éléments compris dans le réseau 20, et comprend, en outre, un moteur d'entraînement 121, également appelé simplement moteur et une machine électrique 123. L'aéronef 10, comprenant deux moteurs 21 et 121, est dit bi-moteur. Le moteur 121 est identique au moteur 21.

La machine électrique 123 est similaire à la machine électrique 23 à l'exception des différences décrites ci-dessous. La machine électrique 123 comprend un bobinage 125, chacun comprenant trois enroulements connectés entre eux en étoile, respectivement les enroulements 126, 127 et 128 pour le bobinage 125. L'enroulement 125 comprend ainsi un point milieu, ou point neutre 129. Le réseau 120 comprend un convertisseur 130, semblable au moins fonctionnellement au convertisseur 30. Le convertisseur 130 connecté aux enroulements 126, 127 et 128.

En outre, la machine électrique 123 comprend un bobinage 135, comprenant des enroulements 136, 137 et 138, connectés en étoile au niveau d'un point neutre 139. Le réseau 120 comprend également un convertisseur 140, connecté aux enroulements 136, 137 et 138.

L'unité électronique de contrôle 68 est connectée en outre aux convertisseurs 130 et 140 et est configurée pour commander chacun des convertisseurs 30, 130 et 140 dans un fonctionnement en redresseur de tension et dans un fonctionnement en élévation de tension.

Les convertisseurs 130 et 140 sont connectés en sortie aux charges, en étant connectées à un bus d'interconnexion 172, respectivement par l'intermédiaire d'interrupteurs 175 et 176. Plus précisément, une borne positive de sortie des convertisseurs 130 et 140 est connectée aux charges via le bus d'interconnexion 172. Les charges comprennent la batterie 70, connectée au bus d'interconnexion via le bus de partage 74, les charges 69 du réseau de bord, et en outre, comprennent avantageusement des charges 169 supplémentaires, connecté au bus d'interconnexion 172. En variante, les charges 169 appartiennent à un réseau de bord supplémentaire.

Le bus d'interconnexion 172 est connecté au bus de partage 74, et donc à la batterie 70 par l'intermédiaire d'un interrupteur de partage 178. Le bus d'interconnexion 172 comprend un interrupteur d'interconnexion 179, permettant d'isoler électriquement les convertisseurs 130 et 140 l'un de l'autre. Les interrupteurs de partage 78 et 178 permettent d'isoler le bus de partage 74 des bus d'interconnexion 72 et 172 respectivement, par exemple en cas de défaut électrique sur l'un des bus d'interconnexion 72 et 172.

Une borne négative de sortie des convertisseurs 130 et 140, non représentée, est connectée à la borne négative de la batterie 70, ou en variante, à la masse.

Le réseau 120 comprend en outre des moyens de connexion 180 et 181 des points neutres 129 et 139 à l'unité de puissance au sol 82. Les moyens de connexion 180 et 181 sont par exemple formés de bus de connexion pour relier une borne positive de l'unité de puissance au sol 82 au point neutre 129, pour relier la borne positive de l'unité de puissance au sol 82 au point neutre 139, et pour relier les convertisseurs 130 et 140 à la borne négative de l'unité de puissance 82, ces derniers n'étant pas représentés.

Les moyens de connexion 180 et 181 comprennent respectivement des interrupteurs 183 et 184, qui lorsqu'ils sont en configuration fermée, laissent circuler un courant électrique depuis l'unité de puissance au sol 82 vers respectivement le point neutre 129 et le point neutre 139, dans les convertisseurs respectifs 130 et 140 et jusqu'à la borne négative de l'unité de puissance au sol 82.

De manière avantageuse, le réseau 120 comprend en outre des moyens de connexion auxiliaires 186 et 188 des convertisseurs 30 et 140 à une source externe d'alimentation supplémentaire 190. La source externe d'alimentation supplémentaire 190 est avantageusement présente au sol, et ne fait pas partie du réseau 120. La source externe d'alimentation supplémentaire 190 est configurée pour fournir un courant alternatif, par exemple de tension efficace égale à 115V.

Les moyens de connexion auxiliaires 186 et 188 sont par exemple des câbles ou des bus de connexion. Les moyens de connexion auxiliaires 186 et 188 comprennent de manière respective des interrupteurs 191, 192, qui, lorsqu'ils sont en configuration fermée, connectent respectivement une borne positive de la source externe d'alimentation supplémentaire 190 via 186 et 188 à l'entrée des convertisseurs 30 et 140.

En variante non représentée, les moyens de connexion auxiliaires 186 sont configurés pour connecter en outre le convertisseur 130 et la source externe d'alimentation 190.

Le procédé de commande du réseau d'alimentation 120 est similaire à celui du réseau d'alimentation 20 sauf pour les différences décrites ci-dessous. Lors de l'étape 1102, l'unité électronique de contrôle 68 commande chaque convertisseur 30, 130 et 140 dans le fonctionnement en redresseur de tension, lorsque les machines électriques 23 et 123 convertissent un couple mécanique, fourni respectivement par les moteurs 21 et 121, en tension alternative.

Avantageusement, les interrupteurs 76, 77, 78 et 175, 176, 178 et 179 sont commandés en configuration fermée ou ouverte, en fonction des besoins d'un utilisateur, par exemple qui souhaite alimenter les charges 69 et 169, connectées aux bus d'interconnexion 72 et 172, sans charger la batterie 70.

Selon un exemple non représenté, lors de l'étape 1102, les interrupteurs 77 et 179 sont en configuration ouverte, pour ne pas charger la batterie 70, et pour éviter un court-circuit entre les convertisseurs 130 et 140.

Selon un autre exemple, non représenté, la batterie 70 est chargée à partir du moteur 121, les interrupteurs 77, 175, 178 et 179 étant en configuration fermée, et les autres interrupteurs en configuration ouverte.

En variante, l'un des moteurs, par exemple le moteur 121 est utilisé pour charger la batterie 70, et l'autre moteur, par exemple le moteur 21 est utilisé pour alimenter les charges 69.

De manière avantageuse, l'étape 1102 est également effectuée lorsque les moyens de connexion auxiliaires 186 et/ou 188 sont connectés à la source externe d'alimentation 190. Autrement dit, lorsque les moyens de connexion auxiliaires 186 et/ou 188 sont connectés à la source externe d'alimentation 190, l'unité électronique de contrôle 68 commande le convertisseur 30 et/ou le convertisseur 140 en fonctionnement en redresseur de tension, pour l'alimentation du convertisseur 30 et/ou du convertisseur 140 afin d'alimenter les charges, par exemple d'alimenter les charges des réseaux de bord 69 et/ou 169, ou, en variante on en complément, de charger la batterie 70.

Lors de l'étape 1104, l'unité électronique de contrôle 68 commande au moins l'un des convertisseurs 30, 130 et 140 dans le fonctionnement en élévation de tension lorsque les moyens de connexion correspondants sont connectés à l'unité de puissance au sol 82.

Dans l'exemple de la figure 3, les moyens de connexion 180 sont connectés à l'unité de puissance au sol 82, et l'interrupteur 183 est en configuration fermée. Ainsi, seul le point neutre 129 est connecté à l'unité de puissance au sol 82 pour son alimentation. Le convertisseur 130 est alors commandé en élévation de tension par l'unité électronique de contrôle 68 afin d'alimenter électriquement les charges 69 et 169 et/ou de charger la batterie 70.

Avantageusement, lors de l'étape 1104, les interrupteurs 77, 175, 178 et 179 sont également en configuration fermée, afin de permettre la circulation du courant du convertisseur 130 jusqu'à la batterie 70, et les autres interrupteurs sont en configuration ouverte.

En variante, lors de l'étape 1104, l'unité électronique de contrôle 68 commande chaque convertisseur 30, 130 et 140 dans le fonctionnement en élévation de tension, lorsque les moyens de connexion 80 et 180 sont connectés à l'unité de puissance au sol 82 pour l'alimentation des points neutres 29, 129 et 139. Les interrupteurs 83, 183 et 184 sont fermés pour assurer la connexion des moyens de connexion 80, 180 et 181 à l'unité de puissance au sol 82. La tension fournie par l'unité de puissance au sol 82 via les moyens de connexion 80, 180 et 181 circule à la fois dans le point neutre 29, dans le point neutre 129, et dans le point neutre 139. Autrement dit, tous les convertisseurs 30, 130 et 140 sont alimentés de manière simultanée par l'unité de puissance au sol 82. Les interrupteurs 76, 77, 78, 175, 176, 178 et 179 sont en configuration fermée pour assurer l'alimentation électrique des charges, par exemple, le chargement de la batterie 70. En variante, les interrupteurs 76, 77, 175, 176, 178 et 179 sont en configuration fermée et l'interrupteur 78 est en configuration ouverte. Dans ce cas, les convertisseurs 130 et 140 alimentent la batterie 70 et les charges 169, et le convertisseur 30 alimente en électricité d'autres charges de l'aéronef 10, comme par exemple les charges 69.

En variante encore, les interrupteurs 83, 183 et 184 sont commandés par un utilisateur pour que les convertisseurs 30, 130 et 140 soient alimentés de manière cyclique. Par exemple, lorsque l'interrupteur 83 est en configuration fermée, les interrupteurs 183 et 184 sont en configuration ouverte. Seul le point neutre 29 est alimenté, et seul le convertisseur 30 est commandé dans le fonctionnement en élévation de tension. Au bout d'une durée prédéterminée, ou en variante, lorsqu'une température dans le bobinage 25 dépasse un seuil, l'interrupteur 83 bascule en configuration ouverte et l'interrupteur 183 bascule en configuration fermée, le convertisseur 130 est commandé dans le fonctionnement en élévation de tension et le convertisseur 30 n'est plus commandé dans le fonctionnement en élévation de tension. De même, au bout d'une durée prédéterminée, ou lorsqu'une température du bobinage 125 dépasse un seuil, l'interrupteur 183 bascule en configuration ouverte, l'interrupteur 184 bascule en configuration fermée, le convertisseur 140 est commandé dans le fonctionnement en élévation de tension et le convertisseur 130 n'est plus commandé dans le fonctionnement en élévation de tension. La batterie 70 est ainsi alimentée successivement par les convertisseurs 30, 130 et 140.

D'autres variantes sont encore possible, comme l'alimentation des charges 69 et 169 par le convertisseur 30 en basculant les interrupteurs 76, 78 et 178 en configuration fermée, les autres interrupteurs étant en configuration ouverte.

Avantageusement, lors de l'étape 1106, au moins l'un des convertisseurs 30, 130 140 est commandé dans le fonctionnement en onduleur. Dans ce cas, la machine électrique 23 ou 123 connectée au convertisseur 30, 130 ou 140 commandé dans le fonctionnement en onduleur entraîne le moteur 21 ou 121 auquel elle est connectée.

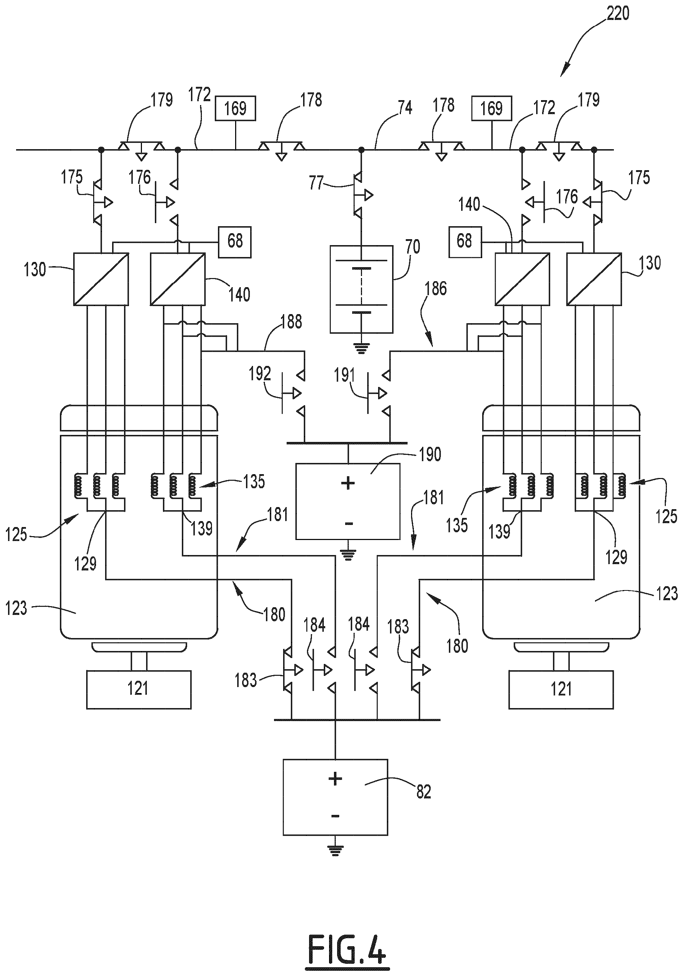

La figure 4 représente un schéma d'un réseau 220, en tant que forme de réalisation alternative au réseau 120. Le réseau 220 est similaire au réseau 120, sauf pour les différences décrites ci-dessous. Le réseau 220 comprend deux moteurs d'entraînement 121. La machine électrique 123, les convertisseurs 130 et 140, ainsi que les moyens de connexion 180 et 181, remplacent respectivement la machine électrique 23, le convertisseur 30 ainsi que les moyens de connexion 80. De même, un bus d'interconnexion 172 remplace le bus d'interconnexion 72 et les interrupteurs 175, 176, d'une part, et 178 et 179 d'autre part remplacent les interrupteurs 76 et 78. Des charges 169 sont chacunes connectées à l'un des bus d'interconnexion 172. Le moyen de connexion auxiliaire 186 est configuré pour relier le convertisseur 140 et la source externe d'alimentation 190.

L'unité électronique de contrôle 68 est connectée à chaque convertisseur 130 et 140, et configurée pour commander chaque convertisseur 130, 140 selon le fonctionnement en redresseur de tension lorsque les machines électriques 123 convertissent un couple mécanique fourni par les moteurs 121 en un courant électrique alternatif, et avantageusement, lorsque les moyens de connexion 186, 188 sont connectés à la source externe d'alimentation 190. L'unité électronique de contrôle 68 est également configurée pour commander chaque convertisseur 130, 140 selon le fonctionnement en élévation de tension lorsque les moyens de connexion 180, 181 sont connectés à l'unité de puissance au sol 82 pour l'alimentation des points milieux 129, 139, afin d'alimenter électriquement les charges, par exemple alimenter les charges du réseau de bord 169 et/ou charger la batterie 70.

Le procédé de commande du réseau 220 est identique à ce qui a été décrit pour le réseau 120.

Dans l'exemple de la figure 4, les moyens de connexion 180 et 181 sont connectés à l'unité de puissance au sol 82 car les interrupteurs 183 sont en configuration fermée. Les convertisseurs 130 sont commandés dans le fonctionnement en élévation de tension par l'unité électronique de contrôle 68. Les interrupteurs 175, 178 et 179 sont en configuration fermée et les autres interrupteurs sont en configuration ouverte. Ainsi, la batterie 70 est alimentée simultanément par les convertisseurs 130. En variante non représentée, l'un des interrupteurs 178 est en configuration ouverte. Dans ce cas, deux convertisseurs 130 et 140, connectés à la même machine électrique 123, alimentent la batterie 70 et une partie du des charges 169 et les deux autres convertisseurs 130 et 140 alimentent en électricité les autres charges de l'aéronef 10, comme par exemple l'autre partie des charges 169.

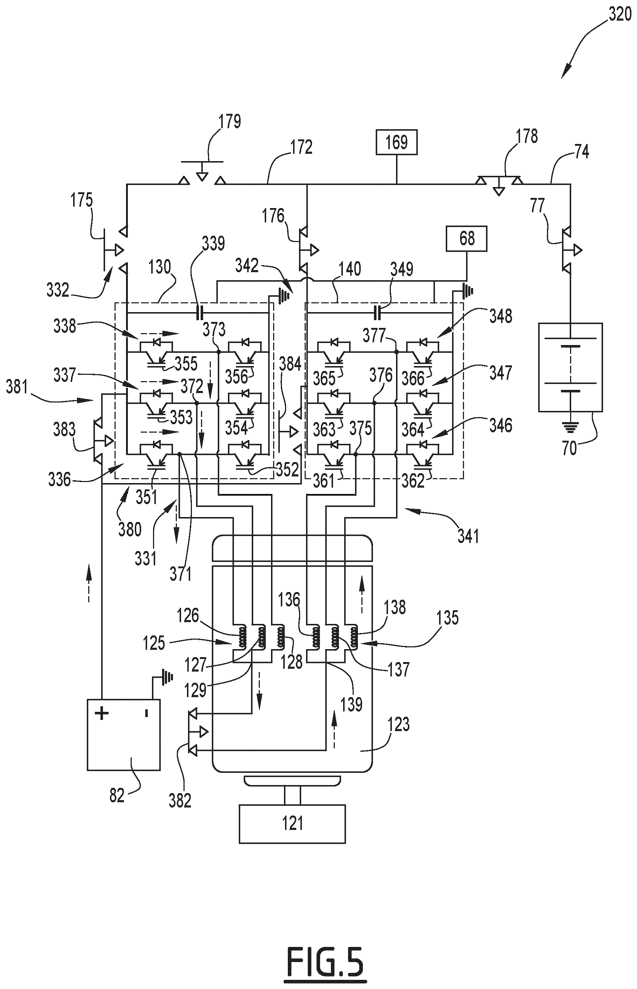

La figure 5 représente un réseau 320, en tant que forme de réalisation alternative aux réseaux 20, 120 et 220 décrits précédemment. Les éléments identiques à ceux des modes de réalisation précédents sont désignés par les mêmes signes de référence, et on décrit prinicpalement ce qui distingue ce mode de réalisation des autres modes de réalisation.

Le réseau 320 représenté sur la figure 5 ne comprend qu'un seul moteur 121. En variante non représentée, le réseau 320 comprend deux moteurs, de manière similaire aux réseaux 120 et 220.

Les convertisseurs 130 et 140 comprennent chacun une entrée 331 et 341, une sortie 332 et 342, trois branches, respectivement 336, 337 et 338, et 346, 347 et 348, et un condensateur, respectivement 339 et 349 connecté en parallèle des branches 336, 337 et 338 d'une part et 346, 347 et 348 d'autre part.

Chaque branche comprend deux interrupteurs, respectivement 351, 352, 353, 354, 355 et 356 pour le convertisseur 130 et 361, 362, 363, 364, 365 et 366 pour le convertisseur 140, et deux diodes, une diode étant associée à un interrupteur et en parallèle de celui-ci. Chaque branche 336, 337 et 338 comprend un point milieu, respectivement 371, 372 et 373, connectés respectivement aux enroulements 126, 127 et 128, et chaque branche 346, 347 et 348 comprend un point milieu, respectivement 375, 376 et 377, connectés respectivement aux enroulements 136, 137 et 138.

Une borne positive des sorties 332 et 342 est connectée au bus d'interconnecion 172, et une borne négative des sorties 332 et 342 est connectée à une référence de potentiel.

Le réseau 320 comprend des moyens de connexion 380 et 381 des points neutres 129 et 139 à l'unité de puissance au sol 82. Les moyens de connexion 380 et 381 sont par exemple formés de bus de connexion, et des interrupteurs 361, 363 et 365 d'une part, et 351, 353 et 353 d'autre part, pour relier la borne positive de l'unité de puissance au sol 82 aux points neutres 129 et 139, respectivement. Ainsi que visible à la figure 5, les moyens de connexion 381 relient la borne positive de l'unité de puissance au sol 82 à la borne positive de la sortie 332 du convertisseur 130. Le point neutre 129 est ainsi alimenté par l'intermédiaire du convertisseur 130 lorsque les interrupteurs 351, 353 et 355 sont configurés tous ou alternativement en configuration fermée.

Avantageusement, le réseau 320 comprend en outre un interrupteur 382, entre les points neutres 129 et 139. L'interrupteur 382 est externe à la machine électrique 123. Lorsque l'interrupteur 382 est en configuration fermée, il connecte les points milieux 129 et 139 entre eux.

Le second point neutre 139 est ainsi alimenté à partir du convertisseur 130 lorsque l'interrupteur 382 est en configuration fermée.

De même, les moyens de connexion 380 relient la borne positive de l'unité de puissance au sol 82 à la borne positive de la sortie 342 du convertisseur 140, pour alimenter le point neutre 139 via les transistors 361, 363, 365. Le point neutre 129 est alimenté lorsque l'interrupteur 382 est en configuration fermée.

Les moyens de connexion 380 et 381 comprennent avantageusement respectivement des interrupteurs 383 et 384, qui lorsqu'ils sont en configuration fermée, laissent circuler un courant électrique depuis l'unité de puissance au sol 82 vers respectivement le convertisseur 130, et vers le convertisseur 140.

Dans l'exemple de la figure 5, lors des étapes 1102 et 1106, l'interrupteur 382 est en configuration ouverte.

Lors de l'étape 1104, le convertisseur 140 est commandé dans le fonctionnement en élévation de tension par l'unité électronique de contrôle 68 lorsque les moyens de connexion 381 sont connectés à l'unité de puissance au sol 82 et lorsque les points neutres 129 et 139 sont connectés entre eux, par l'interrupteur 382 qui est commandé en configuration fermée. Le convertisseur 130 est commandé par l'unité électronique de contrôle 68 pour se comporter comme trois fils, notamment, pour chaque branche 336, 337 et 338 du convertisseur 130, l'un des interrupteurs est commandé en configuration fermée et l'autre interrupteur est commandé en configuration ouverte. Les interrupteurs 351, 353 et 355 sont commandés en configuration fermée et les interrupteurs 352, 354 et 356 sont configurés en configuration ouverte.

En outre, les interrupteurs 77, 176 et 178 sont en configuration fermée et les interrupteurs 175 et 179 sont en configuration ouverte. Ainsi, la tension délivrée par l'unité de puissance au sol 82 circule dans les moyens de connexion 381, dans le bobinage 125 jusqu'au point neutre 139, à travers le bobinage 135 et le convertisseur 140 qui élève la tension, puis à travers le bus d'interconnexion 172 et le bus de partage pour charger la batterie 70, ainsi qu'indiqué par les flèches en pointillés.

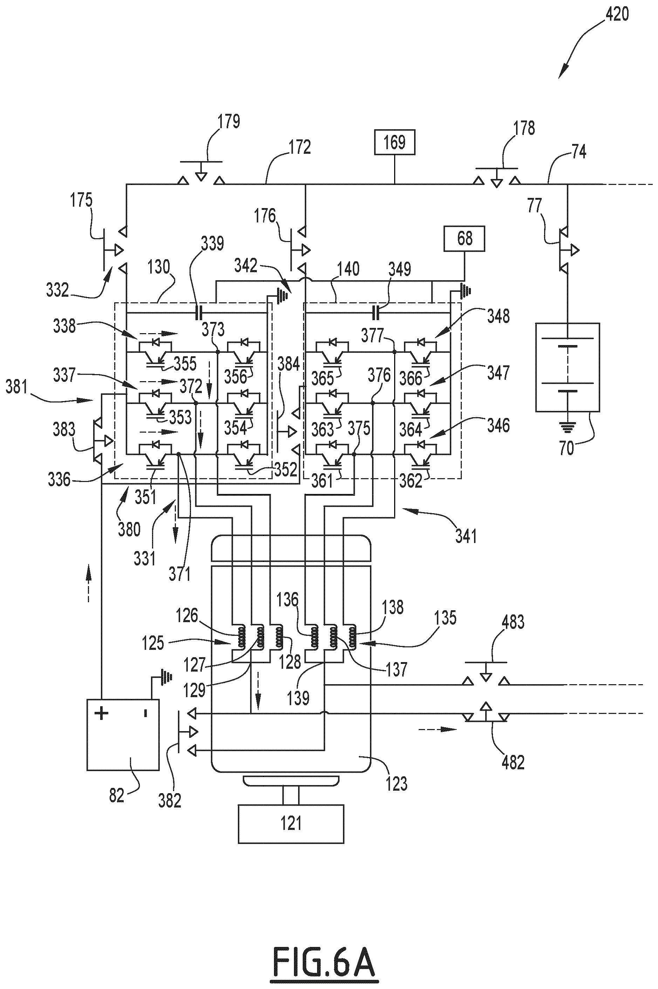

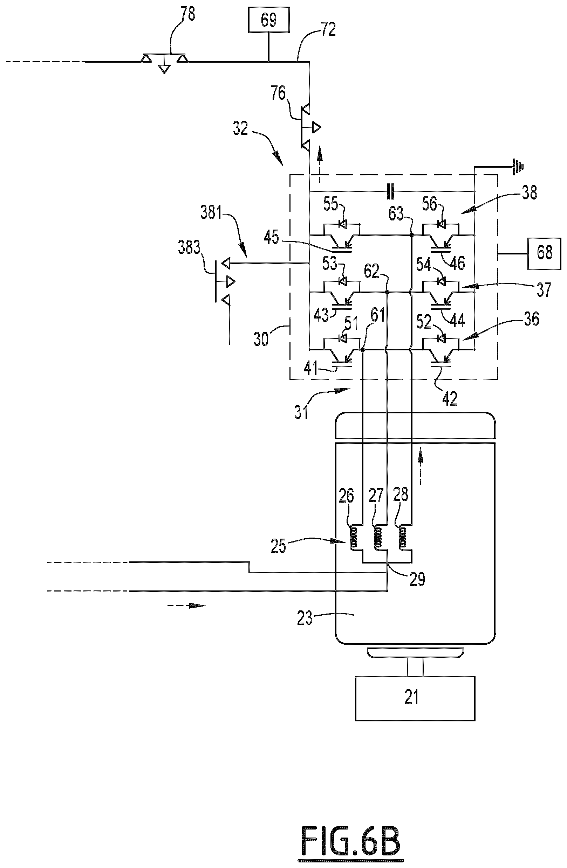

La figure 6 représente un réseau 420, similaire au réseau 320 à l'exception des différences suivantes. Le réseau 420 comprend un moteur 21 en outre du moteur 121, qui comprend un enroulement 25 et dont les bobinages sont connectés respectivement à un convertisseur 30. Le convertisseur 30 est connecté à sa sortie 32 aux charges de l'aéronef 10, par exemples les charges 69, la batterie 70, ainsi que déjà décrit dans le cadre de la figure 3.

Le réseau 420 comprend un autre moyen de connexion 381 du point neutre 29 à l'unité de puissance au sol 82. Dans la figure 6, plus précisément sur la partie finale de la figure 6, la connexion de cet autre moyen de connexion 381 à l'unité de puissance au sol 82 n'est pas représentée. Cet autre moyen de connexion 381 est par exemple formé du bus de connexion et des interrupteurs 41, 43 et 45 pour relier la borne positive de l'unité de puissance au sol 82 au point neutre 29. Le point neutre 29 est ainsi alimenté par l'intermédiaire du convertisseur 30 lorsque les interrupteurs 41, 43, 45 sont tous ou alternativement en configuration fermée.

Le réseau 420 comprend en outre un interrupteur 482, entre les points neutres 29 et 129, et, avantageusement, un interrupteur 483 entre les points neutres 29 et 139. Les interrupteurs 482 et 483 sont externes aux machines électriques 23 et 123. Lorsque l'interrupteur 482 est en configuration fermée, il connecte les points milieux 29 et 129 entre eux. Lorsque l'interrupteur 483 est en configuration fermée, il connecte les points milieux 29 et 139 entre eux.

Dans l'exemple de la figure 6, l'interrupteur 383 reliant l'unité de puissance 82 et le convertisseur 130, et l'interrupteur 482 sont en configuration fermée. Lors de l'étape 1104, le convertisseur 30 est commandé dans le fonctionnement en élévation de tension par l'unité électronique de contrôle 68 lorsque les moyens de connexion 381 sont connectés entre le convertisseur 130 et l'unité de puissance au sol 82 et lorsque les points neutres 129 et 29 sont connectés entre eux par l'interrupteur 482 qui est commandé en configuration fermée. Le convertisseur 130 est configuré pour se comporter comme trois fils.

En outre, les interrupteurs 76, 77 et 78 sont en configuration fermée et les interrupteurs 175, 176 et 179 sont en configuration ouverte. Les interrupteurs 382 et 483 sont également en configuration ouverte. Ainsi, la tension délivrée par l'unité de puissance au sol 82 circule dans les moyens de connexion 381, dans le bobinage 125, à travers l'interrupteur 482 jusqu'au point neutre 29, à travers le bobinage 25 et le convertisseur 30 qui élève la tension, puis à travers le bus d'interconnexion 72 et le bus de partage 74 pour charger la batterie 70, ainsi qu'indiqué par les flèches en pointillés.

Le fonctionnement est similaire si l'unité de puissance au sol 82 est connectée au convertisseur 30 via les moyens de connexion 381, pour alimenter l'un des convertisseurs 130 ou 140 respectivement via les points neutres 129 et 139, en fermant les interrupteurs 482, 483 respectivement. Le convertisseur 30 est alors commandé pour se comporter comme trois fils et le convertisseur 130 ou 140 respectivement, est commandé dans le fonctionnement en élévation de tension. Le fonctionnement est également similaire si l'unité de puissance au sol 82 est connectée au convertisseur 140 pour alimenter le point neutre 29 et le convertisseur 30. Dans ce cas, les moyens de connexion 380 relient le convertisseur 140 et l'unité de puissance au sol 82, l'interrupteur 384 étant fermé. L'interrupteur 483 est fermé, le convertisseur 140 est commandé pour se comporter comme trois fils, et le convertisseur 30 est commandé dans le fonctionnement en élévation de tension.

Une variante non représentée est un réseau comprenant deux moteurs, mais chaque moteur ne comprend qu'un enroulement, ces deux enroulements pouvant être connectés l'un à l'autre via un interrupteur 482, de manière similaire à ce qui a été décrit pour le réseau 420. Une autre variante est un réseau comprenant deux moteurs comprenant chacun deux enroulements, et les points neutres des enroulements de l'un des moteurs peuvent être connectés entre eux ainsi que décrit pour le réseau 320, ou à l'un ou l'autre des points neutres des enroulements de l'autre moteur, de manière similaire à ce qui a été décrit pour le réseau 420, en dupliquant les interrupteurs 482 et 483.

En variante non représentée, le réseau comprend plus de deux moteurs d'entraînement et plusieurs machines électriques, connectées mécaniquement à l'un des moteurs d'entraînement. En variante encore, chaque machine électrique peut comprendre plus de deux enroulements, chacun étant connecté à un convertisseur lui-même connecté au bus d'interconnexion 72 ou 172.

Toute caractéristique décrite pour un mode de réalisation ou une variante dans ce qui précède peut être mise en œuvre pour les autres modes de réalisation et variantes décrits précédemment, pour autant que techniquement faisable.

En particulier, selon une variante non représentée, le réseau 120 comprend un interrupteur 382 connecté entre les points milieux 129 et 139. En variante ou en complément, le réseau 120 comprend un interrupteur 482 reliant les points milieux 129 et 29 et/ou un interrupteur 483 reliant les points milieux 139 et 29.

Le réseau 120 comprend alors également des moyens de connexion 380, qui connectent la borne positive de sortie du convertisseur 140 à l'unité de puissance au sol 82, et des moyens de connexion 381 qui connectent la borne positive de sortie de l'un des convertisseurs 130 ou 30 à l'unité de puissance au sol 82, en fonction du convertisseur 30, 130 ou 140 qui est utilisé comme trois fils.

Selon une variante, le réseau 220 comprend un ou deux interrupteurs 382, connectés, le cas échéant, respectivement entre les points milieux 129 et 139 d'une même machine électrique. En variante ou en complément, le réseau 220 comprend un ou deux interrupteurs 482, reliant respectivement les deux points milieux 129 entre eux, et deux points milieux 129 et 139 de machines électriques différentes entre eux. En variante ou en complément, le réseau 220 comprend un ou deux interrupteurs 483, reliant respectivement les deux points milieux 139 entre eux, et les deux autres points milieux 129 et 139 entre eux.

Le réseau 220 comprend alors également des moyens de connexion 380, qui connectent alors la borne positive de sortie de l'un des convertisseurs 140 à l'unité de puissance au sol 82, et des moyens de connexion 381 qui connectent la borne positive de sortie de l'un des convertisseurs 130 à l'unité de puissance au sol 82, en fonction du convertisseur 130 ou 140 qui est utilisé comme trois fils.

## Revendications

1. Réseau d'alimentation (20 ; 120 ; 220 ; 320 ; 420) pour un aéronef (10), le réseau (20 ; 120 ; 220) comprenant :
- un moteur d'entraînement (21 ; 121) ;
- une machine électrique (23 ; 123), connectée mécaniquement au moteur (21 ; 121) pour l'entraînement de la machine électrique (23 ; 123), la machine électrique (23 ; 123) comprenant au moins un bobinage (25 ; 125, 135), le ou chaque bobinage (25 ; 125, 135) comprenant au moins trois enroulements (26, 27, 28 ; 126, 127, 128, 136, 137, 138), connectés entre eux en étoile, le ou chaque bobinage (25 ; 125, 135) comprenant un point milieu (29 ; 129, 139) commun à chaque enroulement (26, 27, 28 ; 126, 127, 128, 136, 137, 138) ;
- au moins un convertisseur (30 ; 130, 140), le ou chaque convertisseur (30 ; 130, 140) étant connecté aux enroulements (26, 27, 28 ; 126, 127, 128, 136, 137, 138) du ou de l'un des bobinages (25 ; 125, 135) de la machine électrique (23 ; 123) ;
- des charges (69, 70 ; 169) connectées au, ou à chaque convertisseur (30 ; 130, 140) ; et
- une unité électronique de contrôle (68) du ou de chaque convertisseur (30 ; 130 ; 140), l'unité électronique de contrôle (68) étant configurée pour commander au moins un convertisseur parmi le ou les convertisseurs (30 ; 130, 140) dans un fonctionnement en redresseur de tension lorsque la machine électrique (23 ; 123) convertit un couple mécanique fourni par le moteur (21 ; 121) en un courant électrique alternatif,
**caractérisé en ce que** le réseau (20 ; 120 ; 220 ; 320 ; 420) comprend en outre des moyens de connexion (80 ; 180, 181 ; 380, 381) du point milieu (29 ; 129, 139) du ou de chaque bobinage (25 ; 125, 135) à une unité de puissance au sol (82), et **en ce que** l'unité électronique de contrôle (68) est configurée pour commander au moins un convertisseur parmi le ou les convertisseurs (30 ; 130, 140) dans un fonctionnement en élévation de tension lorsque les moyens de connexion (80 ; 180, 181 ; 380, 381) sont connectés à une unité de puissance au sol (82) pour l'alimentation du point milieu (29 ; 129, 139) du ou de chaque bobinage (25 ; 125, 135), afin d'alimenter électriquement les charges (69, 70 ; 169).

2. Réseau (120 ; 220 ; 320) selon la revendication 1, dans lequel la machine électrique (123) comprend un premier et un deuxième bobinage (125, 135), et le réseau (120 ; 220) comprend un premier et un deuxième convertisseur (130, 140), le premier convertisseur (130) étant connecté aux enroulements (126, 127, 128) du premier bobinage et le deuxième convertisseur (140) étant connecté aux enroulements du deuxième bobinage (136, 137, 138).

3. Réseau (320 ; 420) selon l'une quelconque des revendications précédentes, dans lequel la machine électrique (123) comprend un premier bobinage (125), et le réseau (320 ; 420) comprend :
- un deuxième bobinage (135 ; 25) comprenant au moins trois enroulements (136, 137, 138 ; 26, 27, 28) connectés entre eux en étoile et un point milieu (139 ; 29) commun à chaque enroulement (136, 137, 138 ; 26, 27, 28),
- un premier et un deuxième convertisseur (130, 140 ; 30), le premier convertisseur (130) étant connecté aux enroulements (126, 127, 128) du premier bobinage (125) et le deuxième convertisseur (140 ; 30) étant connecté aux enroulements (136, 137, 138 ; 26, 27, 28) du deuxième bobinage (135 ; 25), et
- un interrupteur (382 ; 482), connecté entre les points milieux (129, 139 ; 129, 29) du premier et du deuxième bobinage (125, 135 ; 125, 25) et dans lequel, lorsque le deuxième convertisseur (140 ; 30) est commandé dans un fonctionnement en élévation de tension, les points milieux (129, 139 ; 129, 29) des premier et deuxième bobinages (125, 135 ; 125, 25) sont connectés entre eux par l'interrupteur (382 ;482), et les moyens de connexion (381) connectent une borne positive de sortie du premier convertisseur (130) à l'unité de puissance au sol (82) pour alimenter le point milieu (139 ; 29) du deuxième bobinage (135 ; 25) par l'intermédiaire du premier convertisseur (130) et du premier bobinage (125), afin d'alimenter électriquement les charges (70, 169 ; 69).

4. Réseau (220) selon l'une quelconque des revendications précédentes, le réseau (220) comprenant en outre :
- un deuxième moteur d'entraînement (121) ;
- une deuxième machine électrique (123), connectée mécaniquement au deuxième moteur (121) pour l'entraînement de la deuxième machine électrique (123), la deuxième machine électrique (123) comprenant un bobinage (125) comprenant au moins trois enroulements (126, 127, 128), connectés entre eux en étoile, de sorte que le bobinage (125) comprenne un point milieu (129) commun à chaque enroulement (126, 127, 128) ;
- un troisième convertisseur (130), connecté aux enroulements (126, 127, 128) de la deuxième machine électrique (123) et aux charges (70, 169) ;
- les moyens de connexion (180, 181) sont des premiers et deuxièmes moyens de connexion du point milieu (129, 139) de chaque bobinage (125, 135) de la première machine électrique (123) à l'unité de puissance au sol (82) et le réseau (220) comprend des troisièmes moyens de connexion (180) du point milieu du bobinage (125) de la deuxième machine électrique (123) à l'unité de puissance au sol (82) ;
l'unité électronique de contrôle (68) étant configurée pour commander le troisième convertisseur (130) dans un fonctionnement en redresseur de tension lorsque la machine électrique (123) convertit un couple mécanique fourni par le deuxième moteur (121) en un courant électrique alternatif, et pour commander le troisième convertisseur (130) dans un fonctionnement en élévation de tension lorsque les deuxièmes moyens de connexion (180) sont connectés à l'unité de puissance au sol (82) pour l'alimentation du point milieu (129) du bobinage (125) de la deuxième machine électrique (123) afin d'alimenter électriquement les charges (69, 70, 169).

5. Réseau (20 ; 120 ; 220 ; 320) selon l'une quelconque des revendications précédentes, dans lequel le ou chaque bobinage (25 ; 125, 135) comprend trois enroulements (26, 27, 28 ; 126, 127, 128, 136, 137, 138) et le ou chaque convertisseur (30 ; 130, 140) comprend trois branches (36, 37, 38 ; 336, 337, 338, 346, 347, 348), chaque branche (36, 37, 38 ; 336, 337, 338, 346, 347, 348) comprenant deux interrupteurs (41, 42, 43, 44, 45, 46 ; 351, 352, 353, 354, 355, 356, 361, 362, 363, 364, 365, 366), et un point milieu (61, 62, 63 ; 371, 372, 373, 375, 376, 377) de chaque branche (36, 37, 38 ; 336, 337, 338, 346, 347, 348), situé entre les deux interrupteurs (41, 42, 43, 44, 45, 46 ; 351, 352, 353, 354, 355, 356, 361, 362, 363, 364, 365, 366), étant relié à un enroulement (26, 27, 28 ; 126, 127, 128, 136, 137, 138 ) du bobinage (25 ; 125, 135).

6. Réseau (120 ; 220) selon l'une quelconque des revendications précédentes, dans lequel le réseau (120 ; 220) comprend des moyens de connexion auxiliaires (186, 188) du ou de chaque convertisseur (30, 140) à une source externe d'alimentation (190), et l'unité électronique de contrôle (68) est configurée en outre pour commander le ou chaque convertisseur (30, 140) selon le fonctionnement en redresseur de tension en outre lorsque les moyens de connexion auxiliaires (186, 188) sont connectés à une unité de puissance au sol auxiliaire (190), les moyens de connexion auxiliaires (186, 188) comprenant chacun un interrupteur (191, 192), pour l'alimentation du ou de chaque convertisseur (30, 140) afin d'alimenter électriquement les charges (69, 70, 169).

7. Réseau (20 ; 120 ; 220 ; 320) selon l'une quelconque des revendications précédentes, dans lequel les charges incluent une batterie (70), de tension supérieure ou égale à 250V, connectée au ou à chaque convertisseur (30 ; 130, 140), et lorsque l'unité électronique de contrôle (68) commande au moins un convertisseur parmi le ou les convertisseurs (30 ; 130, 140) dans un fonctionnement en élévation de tension, la batterie (70) est alimentée électriquement afin d'être chargée.

8. Aéronef (10) comprenant un réseau d'alimentation (20 ; 120 ; 220 ; 320) selon l'une quelconque des revendications précédentes.

9. Procédé de commande d'un réseau d'alimentation (20 ; 120 ; 220 ; 320) selon l'une quelconque de revendications 1 à 7, mis en œuvre par l'unité électronique de contrôle (68), le procédé comprenant les étapes suivantes :
- commande (1102) d'au moins un parmi le ou les convertisseurs (30 ; 130, 140) dans un fonctionnement en redresseur de tension, lorsque la machine électrique (23 ; 123) convertit un couple mécanique fourni par le moteur (21 ; 121) en courant électrique alternatif ; et
- commande (1104) d'au moins un convertisseur parmi le ou les convertisseurs (30 ; 130, 140) dans un fonctionnement en élévation de tension lorsqu'au moins l'un des moyens de connexion (80 ; 180, 181) est connecté à l'unité de puissance au sol (82) pour l'alimentation du point milieu (29 ; 129, 139) du bobinage (25 ; 125, 135).

10. Procédé de commande selon la revendication 9 dans lequel le procédé comprend en outre une commande (1106) d'au moins un convertisseur parmi le ou les convertisseurs (30 ; 130, 140) dans un fonctionnement en onduleur afin d'alimenter électriquement la machine électrique (23 ; 123) à partir d'une batterie (70) connectée au, ou à chaque convertisseur (30 ; 130, 140).

11. Procédé de commande selon l'une quelconque des revendication 9 à 10 dans lequel le réseau (120 ; 220) comprend des moyens de connexion auxiliaires (186, 188) du ou de chaque convertisseur (30, 140) à une source externe d'alimentation (190), et l'étape de commande (1102) du convertisseur (30, 140) dans le fonctionnement en redresseur de tension est réalisée en outre lorsque les moyens de connexion auxiliaires (186, 188) sont connectés à l'unité de puissance au sol auxiliaire (190).
